# EUROPEAN PATENT SPECIFICATION

(11) **EP 3 621 189 B1**
(45) Date of publication and mention of the grant of the patent: **21.04.2021**
(21) Application number: 18193019.9
(22) Date of filing: 06.09.2018
(51) Int. Cl.: H02M 1/32, H02M 7/483

(54) **MODULAR DC CROWBAR**
MODULARER GLEICHSTROMÜBERSPANNUNGSSCHUTZ
PIED-DE-BICHE CC MODULAIRE

(43) Date of publication of application: 11.03.2020
(73) Proprietor: ABB Power Grids Switzerland AG, 5400 Baden (CH)
(72) Inventor: MAIBACH, Philippe, 5037 Muhen (CH); STEINKE, Juergen, 79774 Albbruck (DE)
(74) Representative: AWA Sweden AB

(56) References cited:
- WO-A1-2009/106187
- WO-A1-2013/044961
- WO-A1-2016/058639
- WO-A1-2018/041370

## Description

### FIELD OF INVENTION

The present application is on the field of power converters, specifically Modular Multilevel Converters (MMC). In particular, devices and methods are disclosed for improving operational safety in cells used in MMCs in case of an electrical failure in one or more cells.

### BACKGROUND OF INVENTION

MMC cells comprise of switches. These switches may be arranged in so-called half bridge or full bridge arrangements. As switches, semiconductors are used, in particular transistors like IGBT (Insulated Gate Bipolar Transistor) which may be arranged in modules.

Faulty semiconductor modules (e.g. IGBT modules) in an MMC cell may pose a high risk of massive damage. In many cases, if one IGBT in a half-bridge or full-bridge fails, the adjacent IGBT may be able to clear the resulting fault current from DC bus capacitor(s). However, there are cases where it may be not possible to prevent this fault current.

As a stray inductance between IGBT and DC bus may be purposely very low (in order to achieve acceptable converter performance / low transient overvoltage at the IGBT collector / low IGBT switching losses) and the stored energy in the cell DC capacitor may be high, the prospective fault current may be extremely high.

Without any countermeasure, the bond wires (the wires which connect the semiconductor chip to metal contacts) within an IGBT module will immediately fail, resulting into an electric arc. This arc will be fed by the high energy stored in the DC capacitor. This results in an explosion of the IGBT module with the consequence of a massive destruction. The difficulties to handle this problem increases with increasing energy stored in the DC capacitor.

The energy of a capacitor in a cell can be calculated by the formula (E=0.5 C U²). At e.g. a voltage of 1000V and a capacitance of the capacitor of 10mF (millifarad) an energy of 5000J (Ws) has to be dissipated in microseconds, before any damage occurs.

There are several possibilities to overcome this issue: Utilization of presspack semiconductors, utilization of explosion boxes protecting the environment from the detrimental effect of the explosion. These are either suited only for high power level or add substantial costs without adding functional improvement for regular operation.

An improved solution is therefore desirable, which addresses the above mentioned problem.

Document WO2016/058639 A1 discloses, in figure 4 thereof, a converter cell for a modular multilevel converter. The converter cell comprises multiple storage capacitor modules connected in parallel. A single capacitor discharge switch is connected in parallel with the storage capacitor modules.

### SUMMARY OF INVENTION

A first aspect of the invention is an assembly for use in a cell in a modular multilevel converter (MMC) or a chain link converter, the assembly comprising at least two circuit arrangements, wherein each of the at least two circuit arrangements comprises: a capacitor having a first and a second terminal and an electrically switching element, wherein the switching element may be electrically connected between the first and second terminals of the capacitor and adapted to be externally activated to short-circuit the capacitor and dissipate energy stored in the capacitor, and wherein the second terminals of the capacitors of the at least two circuit arrangements are electrically connected and form a second electric connecting terminal of the assembly of the at least two circuit arrangements, and wherein for each of the at least two circuit arrangements, a first side of an impedance with a magnitude of a complex resistance greater zero may be electrically connected with the first terminal of the capacitor of the at least two circuit arrangements, and wherein second sides of said impedances of the at least two circuit arrangements are electrically connected, to form a first electrical connecting terminal of the assembly of at least two circuit arrangements.

In another aspect, the present invention may disclose a modular crowbar, formed of the assembly according to aspects of the present disclosure.

In yet another aspect, the present invention may disclose an MMC cell with a half-bride or a full-bridge topology, wherein the MMC cell may be adapted to be connected with a crowbar arrangement or the assembly according to any of the previous claims.

Another aspect of the present invention may concern a multilevel converter/chain link converter which may comprise cells, wherein each cell may be connected to an assembly or a crowbar according to aspects of the invention.

### BRIEF DESCRIPTION OF DRAWINGS

Embodiments of the present disclosure will be presented in the sense of examples and their advantages are explained in greater detail below, with reference to the accompanying drawings, wherein:
FIG. 1a shows a half-bridge cell with crowbars according to embodiments;
FIG. 1b shows a full-bridge with crowbars according to embodiments;
FIG. 2a shows a modular crowbar according to embodiments;
FIG. 2b is a modular crowbar according to other embodiments;
FIG. 2c is a modular crowbar according to other embodiments.
FIG. 3 shows a half-bridge MMC cell with a conventional DC crowbar;
Fig. 4 shows a full-bridge MMC with a conventional DC crowbar

### DETAILED DESCRIPTION OF EMBODIMENTS

Hereinafter, the principle of the present disclosure will be described with reference to the illustrative embodiments. It should be understood, all these embodiments are given merely for the skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The disclosed subject matter will now be described with reference to the attached figures. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

The present subject matter provides a solution which intends to prevent the explosion by utilizing a DC crowbar. In order to reach a scalability, the DC crowbar shall be modular.

A DC crowbar may have to short-circuit a corresponding DC bus portion within a few microseconds in order to bypass the DC bus portion fault current away from the semiconductor (e.g. IGBT) module(s) through the crowbar component.

Therefore, the crowbar component may be a semiconductor, preferably a thyristor, which can be activated by the switching signal. As this component needs to mechanically stay intact after the discharge, it may be preferably a presspack device which may be known to be mechanically very robust. The crowbar device needs to provide a solid and continuous short-circuit after the discharge of the capacitor. The crowbar or better said the thyristor, will not have to stay electrically intact, but it will be forced to fail short instead. Of course, there may be a limit of how much energy can be discharged with such an element while still staying mechanically integer. Therefore, the crowbar shall advantageously be modular and assigned to a maximum allowable size of stored energy in the DC capacitor.

It may be proposed to split a DC crowbar for a converter cell, e.g. within an MMC, into modular partial crowbars. In the state-of-the-art MMC cell, based on IGBT semiconductors, one DC crowbar per cell has been used.

State of the art MMC cells may e.g. be known from Oedegard B., Weiss D., Baumann R., Wikström T.: "Rugged MMC Converter Cell for High Power Applications", EPE 2016, Karlsruhe, September 2016 or Weiss D., Vasiladiotis M., Banceanu C., Drack N., Oedegard B., Grondona A.: "IGCT-based modular multilevel converter for an AC-AC railway power supply", PCIMEurope 2017, Nuremberg, May 2017

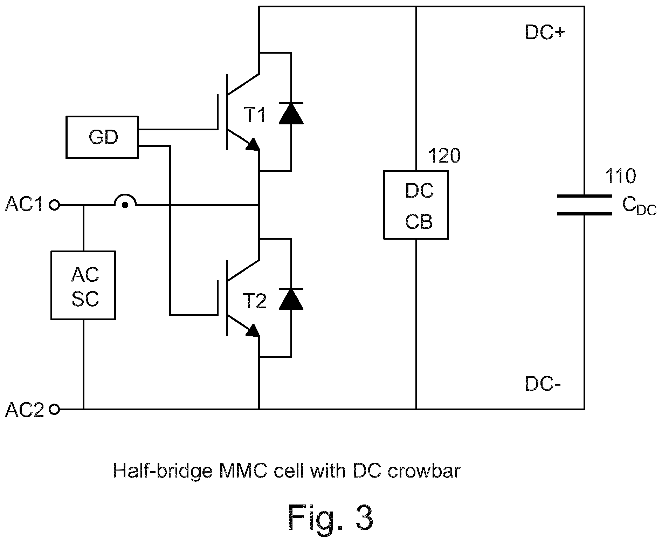

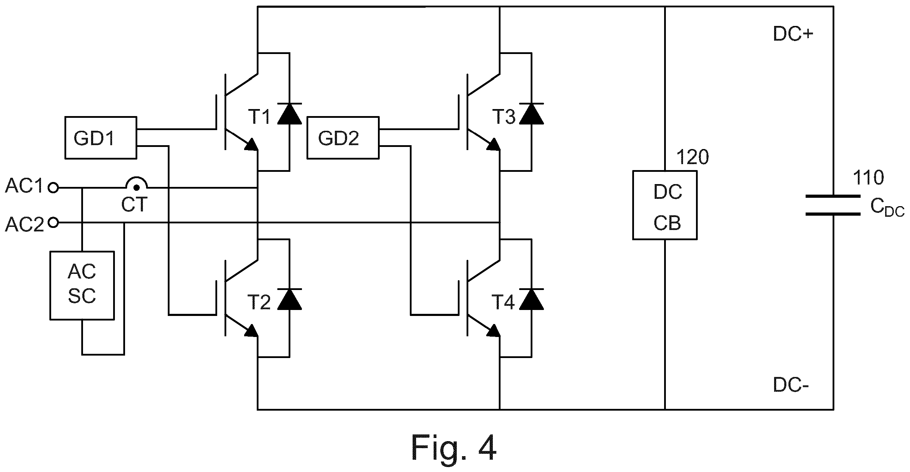

A commonly used crowbar arrangement may be shown in figures 3 and 4. Fig. 3 shows a half bridge, comprising semiconductors (transistors T1 and T2) with a single, non-modular crowbar 120 switched parallel to the half-bridge. Fig. 4 shows a similar arrangement, with the difference that a full-bridge, comprising semiconductors (transistors T1 to T4) may be shown.

The discharge current per MMC cell may be evenly distributed through each modular crowbar because of the soft decoupling of the DC bus. The crowbar semiconductor, e.g. the thyristor, may be triggered from individual gate drivers, however, they may also be triggered from one single gate driver with multiple trigger channels or from one single channel where all thyristor gates are hard parallel connected.

Furthermore, combining it with the idea of "softly" coupled DC bus within a cell, discharge current may be even better distributed to the partial crowbars. Finally, the concept of modular DC crowbar enables easy adaptation of the DC bus depending on the power rating of the MMC cell.

Therefore, a first aspect of the present disclosure provides an assembly, comprising at least two circuit arrangements 100. Each of the at least two circuit arrangements 100 may comprise:

A capacitor 110 having a first and a second terminal 115, 116 and an electrically switching element 120, wherein the switching element 120 may be electrically connected between the first and second terminals 115, 116 of the capacitor 110 and adapted to be externally activated to short-circuit the capacitor 110 and dissipate energy stored in the capacitor 110.

External activation may be understood in the sense that the semiconductor in the crowbar may be connected with an external control unit, issuing an activation signal to a respective thyristor in the modular crowbar. The control unit for the thyristor may be an extra control unit just for activating the crowbars or can also be a part of the control units which may control the switches in the cells. It may also be possible, that the crowbar may employ an internal control unit which may be connected to a data bus which may also control the cells. A data bus may use electrical or optical data transmission. Preferably optical data transmission may be used in this environment, because of the high magnetic and electrical fields, which may disturb the data transmission.

The second terminals 116 of the capacitors of the at least two circuit arrangements are electrically connected and form a second electric connecting terminal 117 of the assembly of the at least two circuit arrangements 100. In other words the second terminals 116, on which contacts of the capacitor 110 and the crowbar 120 are connected, are combined in one single electrical contact terminal 117. The same applies to contact points or terminals 136 which may all be electrical connected and represented by one electrical terminal 118.

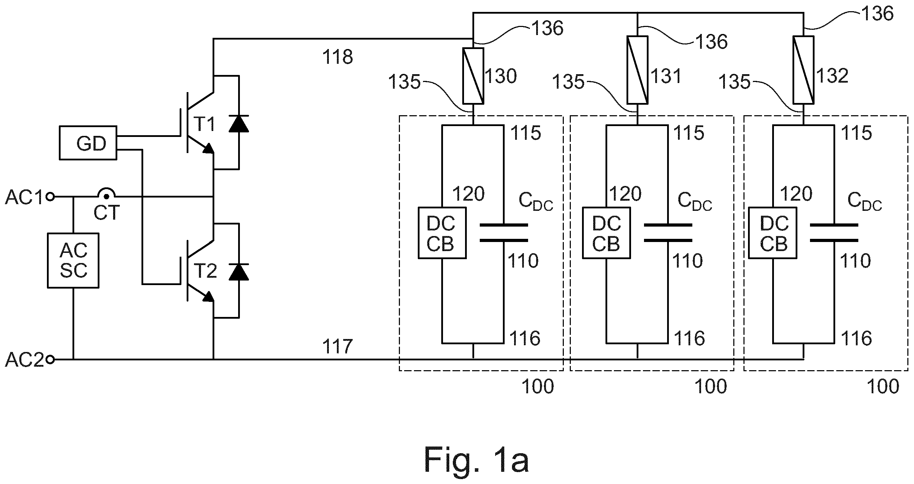

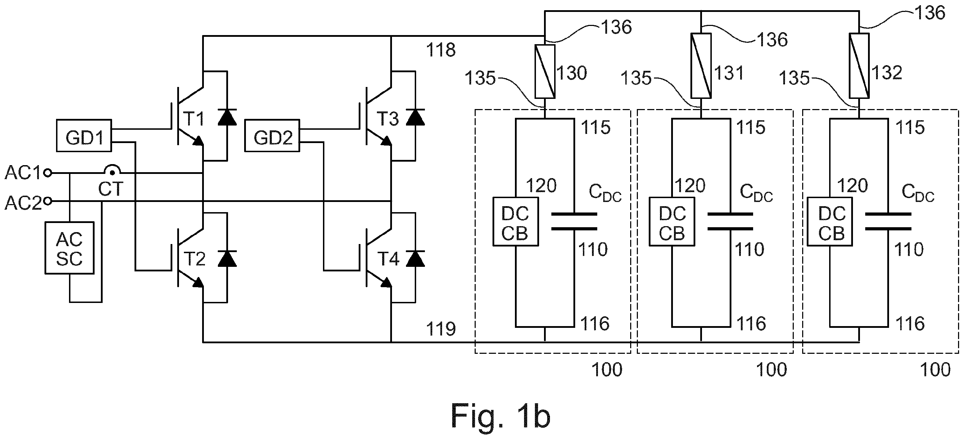

Figs. 1a, 1b show the parallel connection of three assemblies of a capacitor 110 and switching element 120. Switching element 120 may comprise a semiconductor, preferably are thyristor, which may be capable of short-circuiting the capacitor 110. The switching element may also be referred to as a DC crowbar. A single assembly of a thyristor 120 and a parallel switched capacitor 110 may be referred to as a crowbar module. Two or more of such modules may form a modular crowbar.

For each of the at least two circuit arrangements 100, a first side 135 of an impedance 130, 131, 132 with a magnitude of a complex resistance greater zero may be electrically connected with the first terminal 115 of the capacitor 110 of the at least two circuit arrangements 100, and wherein second sides 136 of said impedances 130 of the at least two circuit arrangements 100 are electrically connected, to form a first electrical connecting terminal 118 of the assembly of at least two circuit arrangements 100. Such an impedance 130, 131, 132 may be part of each single crowbar module. In other words, a modular crowbar, comprising two or more single crowbar modules, may also comprise the same number of impedances as the number of single crowbar modules.

For example in figs. 1a, the three modules 100 are assigned three impedances 130, 131, 132. A single assembly of a thyristor 120 and a parallel switched capacitor 110, referred to as a crowbar module, may comprise an impedance 130, 131, 132 as an integral part. Modules 100 may not be switched directly parallel ("hard paralleled") without an impedance 130, 131, 132.

The DC crowbar may be split into modules which may allow scalability with DC bus stored energy. It may be a big advantage to allow DC bus stored energy to be scaled, as the required cell energy may depend, among others, on cell current rating or requirements related to transient behaviour of the converter.

So, to each DC bus portion / stored energy, one DC crowbar assembly may be assigned. One advantage of this modular concept is, that it may be not necessary, to design a conventional non-modular crowbar for the highest current. According to energy needs dependent on the voltage and charge of the capacitors, such a modular crowbar or crowbar arrangement, can easily be adjusted by parallel switching of a number of those crowbars. In such a crowbar the capacitor 110 may be an integral part. Therefore such a modular crowbar may consist of a complete assembly of a capacitor and a thyristor.

The modularity allows for choosing a suitable number of standard thyristors which may be cheaper than one single, more costly thyristor, capable of dissipating the complete capacitor 110 energy.

Another embodiment may disclose an assembly as provided by other embodiments, wherein the impedances 130, 131, 132 are from the group resistors, inductances or a combination thereof. An impedance may be considered as a complex resistance, comprising a real and an imaginary part. A resistor may predominantly have a real part, an inductance a complex part. A simple wire connection may therefore also be considered as an impedance, since the resistance of any wire has also an inductive part, even if this may be very small.

In a further aspect, the present invention may disclose that the switching element 120, which may be adapted to be externally activated to short-circuit the capacitor 110, may preferably be a semiconductor. The switching element may be a thyristor but can be any externally switchable element, which can dissipate energy of the capacitors fast enough.

Another aspect of the present invention may disclose that the first and second electrical connecting terminals 118, 117 of the assembly of the at least two circuit arrangements 100 may be adapted to be connected to terminals of a multilevel converter cell. The term "Terminal" may relate here to any conductive connection point between parts of the circuit. This may e.g. comprise a solder connection, connecting via a harness with terminals or screw terminals. According to figures 1A, B, the modular crowbar comprising of three modules 100 and the respective impedances 130, 131 and 132, may be switched parallel to the half bridge comprising of semiconductors T1 and T2. Capacitors 100 are assigned to each cell.

An embodiment of the present invention may disclose that each semiconductor (thyristor) 120 in the circuit arrangements 100 may have a dedicated driver 200 to which it may be connected to. The driver 200 may be adapted to activate the semiconductor 120 independently from each other. The driver 200 may have one or more outputs for each semiconductor 120. The drivers for the thyristors can be placed anywhere, e.g. in the cell, or outside the cell or may be a part of the crowbar.

The driver may therefore preferably connected to control terminals or control connectors of the switches. In the case the switches are transistors, control connectors may be arranged, at a transistors gate or at a transistors base.

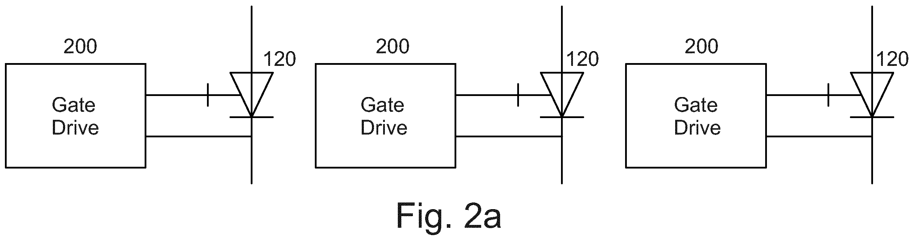

Fig. 2A in detail shows three switches (thyristors) of the modular crowbar. Every switch may be coupled to its own Gate driver 200. Each of the three thyristors or each of the three crowbar modules, can be controlled independently.

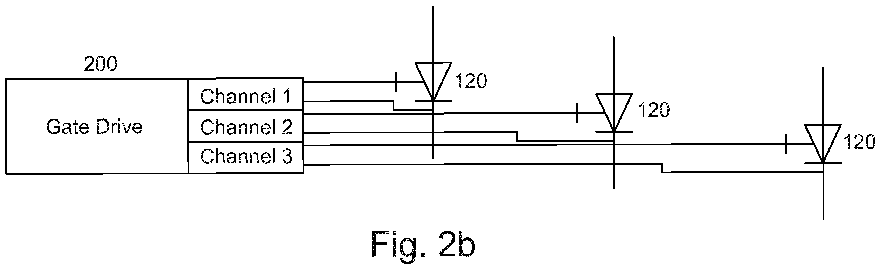

Fig. 2B in detail shows three switches (thyristors) 120 of the modular crowbar. The switches may be activated by only one gate driver 200. The gate driver in Fig. 2B has three different channels, wherein each of the channels (channel 1 to 3) may be assigned to one switch (thyristor) 120. More channels to control more switches may be added to the gate driver.

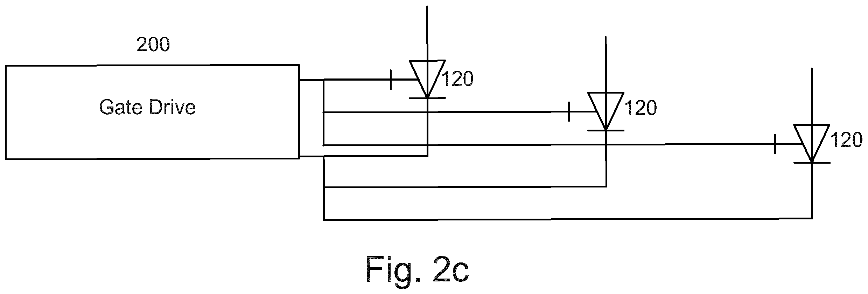

In the embodiment shown in figure 2B, all switches may be activated independently. In Fig. 2C, all switches 120 may be activated at the same time by gate driver 200.

A further embodiment of the present application may disclose a modular crowbar, formed of an assembly according to embodiments of the present application. In case that one of the switches (see T1 to T4 in Figs. 1a, b, 3 and 4) in the current path or branches fails, it may happen that the capacitor 110 is shortened. E.g., see Fig. 1a, T1 remains continuously closed ("on-state") due to an electrical failure in the semiconductor (or gate driver GD) and T2 may be activated, switched from an "off' to an "on"-state by gate driver GD. This may be a worst-case scenario.

The branch in this moment may pose a short circuit, which shortens the attached capacitor 110. Depending, on the currently stored energy in the capacitor, the semiconductors may explode. The modular crowbar may be adapted such, that it dissipates a part of the stored energy so that no further damages happen to the remaining semiconductors in the branches and an explosion may be avoided.

The design of the short circuiting device from which the modules of a modular crowbar may be formed, may preferably to be suitable to dissipate the energy-content of the capacitor. That means, the semiconductor which forms one of the modules of a modular crowbar, preferably a thyristor, may preferably have a load carrying capacity, big enough to dissipate the capacitors energy without exploding.

Further embodiments may concern an MMC cell with a half-bride or a full bridge topology, wherein the MMC cell may be adapted to be connected with a crowbar arrangement or assemblies according to other embodiments. The crowbar arrangement may be a part of the cell.

Another embodiment of the present application may disclose a multilevel converter or chain link converter comprising cells, wherein each cell may be connected to an assembly or a crowbar according to embodiments of the present application.

A further aspect of the present disclosure, concerns an MMC or the chain-link converter according to any of the previous claims, further comprising a network interface for connecting each of the cells to a data network, wherein the converter cell may be operatively connected to the network interface for at least one of carrying out a command received from the data network and sending device status information to the data network.

In a further aspect according to embodiments of the present application, the network interface may be configured to transceive digital signal/data between the modular converter cell and the data network, wherein the digital signal/data may include operational command and/or information about the converter cell or the network and further comprising a processing unit for converting the signal into a digital signal or processing the signal. The modular converter cell or the power converter comprising a multitude of these cells may therefore be completely controllable via a data network.

In particular, the converter, or the cells of the Modular Multilevel Converter may be connected to an internal network interface that is assigned to the converter or the cells as an intermediate converter control or intermediate layer. This intermediate converter control or layer may be connected to control the cells or the converter in an indirect way over the internet. Any known physical transmission channels or -protocols may be used.

The application, presented previously, therefore proposes to split a DC crowbar for a converter cell, e.g. within an MMC, into modular partial crowbars. In the state-of-the-art MMC cell based on IGCT semiconductors, one DC crowbar per cell has been used, as can be seen in figs. 3 and 4. A DC crowbar has to short-circuit the corresponding DC bus portion within a few microseconds in order to bypass the DC bus portion fault current away from the IGBT module(s) through the crowbar component. The crowbar device needs to provide a solid and continuous short-circuit after the discharge. It will not have to stay electrically intact, but it will be forced to fail short instead. There may be a limit of how much energy can be discharged with such an element while still staying mechanically integer.

Therefore, the crowbar component may be a semiconductor, preferably a thyristor. As this component needs to mechanically stay intact after the discharge, it may be preferably a presspack device which are known to be mechanically very robust. The crowbar semiconductors (thyristors) may be triggered from individual gate drivers, however, they may also be triggered from one single gate driver with multiple trigger channels or from one single trigger channel where all thyristor gates are hard parallel connected.

Splitting the DC crowbar into partial crowbars therefore distributes the fault current to a number of current paths/branches. Furthermore, combining it with the idea of a "soft" coupled DC bus within a cell (DC capacitors are not directly "hard-parallel" connected), discharge current may be even better distributed to the partial modular crowbars. Finally, the concept of modular DC crowbar enables easy adaptation of the DC bus depending on the power rating of the MMC cell. The DC crowbar, splitted into modules, allow for scalability with DC bus stored energy. It may be a big advantage to allow stored energy in DC capacitors to be scaled, as the required cell energy may depend among others on cell current rating, requirements related to transient behaviour of the converter. So, to each DC bus portion / stored energy, one DC crowbar assembly may be assigned. The discharge current per MMC cell may be evenly distributed through each modular crowbar because of the soft decoupling of the DC bus.

The design, presented in the forgoing may allow for a modular crowbar, which may be extendable according to specific needs. A single module of the modular crowbar may comprise the semiconductor switch, preferably in form of a thyristor or any other semiconductor, which can be triggered to produce a continuous short-circuit. A module may further comprise a capacitor, which may be the capacitor, necessary in an MMC cell.

In other words, a module preferably may comprise a parallel circuit of the semiconductor for short circuiting and a capacitor. The module may also comprise an impedance, switched in series to said parallel connection. The thyristors may be standard types. Two or more modules may be switched parallel to achieve a scalability of a modular crowbar. The scalability may depend on a number of parallel switched semiconductors in the full- or half-bridges.

Advantageously, the modular crowbar is cheaper than a crowbar designed of a single semiconductor, capable to bear the complete energy load of the capacitor (capacitors).

Further, features illustrated or described as part of one embodiment can be used on or in conjunction with other embodiments to yield yet a further embodiment. It may be intended that the description includes such modifications and variations.

While the foregoing is directed to embodiments of the disclosure, other and further embodiments of the disclosure may be devised without departing from the basic scope thereof, and the scope thereof is determined by the claims that follow.

## Claims

1. An assembly for use in a cell in a modular multilevel converter (MMC) or a chain link converter, the assembly comprising at least two circuit arrangements (100), wherein each of the at least two circuit arrangements (100) comprises:
a capacitor (110) having a first and a second terminal (115, 116); and
an electrically switching element (120), wherein
the switching element (120) is electrically connected between the first and second terminals (115, 116) of the capacitor (110) and adapted to be externally activated to short-circuit the capacitor and dissipate energy stored in the capacitor (110), and
wherein
the second terminals (116) of the capacitors of the at least two circuit arrangements are electrically connected and form a second electric connecting terminal (117) of the assembly of the at least two circuit arrangements (100), and wherein
for each of the at least two circuit arrangements (100),
a first side (135) of an impedance (130) with a magnitude of a complex resistance greater zero is electrically connected with the first terminal (115) of the capacitor (110) of the at least two circuit arrangements (100), and wherein
second sides (136) of said impedances (130) of the at least two circuit arrangements (100) are electrically connected, to form a first electrical connecting terminal (118) of the assembly of at least two circuit arrangements (100).

2. The assembly of claim 1, wherein the impedances are from the group resistors, inductances or a combination thereof.

3. The assembly of any of claims 1 and 2, wherein the switching element (120), which is adapted to be externally activated to short-circuit the capacitor (110), is a semiconductor.

4. The assembly of any of claims 1 to 3, wherein the first and second electrical connecting terminals (118, 119) of the assembly of the at least two circuit arrangements (100) are adapted to be connected to terminals of a multilevel converter cell.

5. The assembly of claim 3, wherein each semiconductor (120) in the circuit arrangements (100) has a dedicated driver (200), adapted to activate the semiconductor (120) simultaneously or independently from each other.

6. A modular crowbar, formed of the assembly according to any of claims 1 to 5.

7. A modular multilevel converter, MMC, cell with a half-bride or a full-bridge topology, wherein
the MMC cell comprises a crowbar arrangement or the assembly according to any of the previous claims.

8. A modular multilevel converter (MMC)/chain link converter comprising cells, wherein each cell comprises an assembly or a crowbar according to any of claims 1 to 6.

9. The MMC or the chain-link converter according to any of claims 7 to 8, further comprising
a network interface for connecting each of the cells to a data network, wherein
the converter cell is operatively connected to the network interface for at least one of carrying out a command received from the data network and sending device status information to the data network.

10. The MMC or the chain-link converter of claim 9, wherein
the network interface is configured to transceive digital signal/data between the modular converter cell and the data network, wherein
the digital signal/data include operational command and/or information about the converter cell or the network and further comprising a processing unit for converting the signal into a digital signal or processing the signal.

## Patentansprüche

1. Baugruppe zur Verwendung in einer Zelle in einem modularen Mehrstufenumsetzer (MMC) oder einem Kettengliedumsetzer, wobei die Baugruppe mindestens zwei Schaltungsanordnungen (100) enthält, wobei jede der mindestens zwei Schaltungsanordnungen (100) Folgendes umfasst:
einen Kondensator (110), der einen ersten und einen zweiten Anschluss (115, 116) aufweist; und
ein elektrisch schaltendes Element (120), wobei
das Schaltelement (120) zwischen dem ersten und dem zweiten Anschluss (115, 116) des Kondensators (110) elektrisch angeschlossen ist und ausgelegt ist, von außen aktiviert zu werden, um den Kondensator kurzzuschließen und Energie, die im Kondensator (110) gespeichert ist, abzuleiten,
die zweiten Anschlüsse (116) der Kondensatoren der mindestens zwei Schaltungsanordnungen elektrisch verbunden sind und einen zweiten elektrischen Verbindungsanschluss (117) der Baugruppe der mindestens zwei Schaltungsanordnungen (100) bilden, und
für jede der mindestens zwei Schaltungsanordnungen (100),
eine erste Seite (135) einer Impedanz (130) mit einer Größe eines komplexen Widerstands größer als null mit dem ersten Anschluss (115) des Kondensators (110) der mindestens zwei Schaltungsanordnungen (100) elektrisch verbunden ist, und
die zweiten Seiten (136) der Impedanzen (130) der mindestens zwei Schaltungsanordnungen (100) derart elektrisch verbunden sind, dass ein erster elektrischer Verbindungsanschluss (118) der Baugruppe der mindestens zwei Schaltungsanordnungen (100) gebildet wird.

2. Baugruppe nach Anspruch 1, wobei die Impedanzen aus der Gruppe Widerstände, Induktivitäten oder eine Kombination davon sind.

3. Baugruppe nach einem der Ansprüche 1 und 2, wobei das Schaltelement (120), das ausgelegt ist, von außen aktiviert zu werden, um den Kondensator (110) kurzzuschließen, ein Halbleiter ist.

4. Baugruppe nach einem der Ansprüche 1 bis 3, wobei der erste und der zweite elektrische Verbindungsanschluss (118, 119) der Baugruppe der mindestens zwei Schaltungsanordnungen (100) ausgelegt sind, mit Anschlüssen einer Mehrstufen-Umsetzerzelle verbunden zu sein.

5. Baugruppe nach Anspruch 3, wobei jeder Halbleiter (120) in den Schaltungsanordnungen (100) eine speziell dafür vorgesehene Ansteuereinrichtung (200) aufweist, die ausgelegt ist, den Halbleiter (120) gleichzeitig oder voneinander unabhängig zu aktivieren.

6. Modularer Überspannungsschutz, der aus der Baugruppe nach einem der Ansprüche 1 bis 5 gebildet ist.

7. Modulare Mehrstufen-Umsetzerzelle, MMC-Zelle, mit einer Halbbrücken- oder Vollbrückentopologie, wobei die MMC-Zelle eine Überspannungsschutzanordnung oder die Baugruppe nach einem der vorhergehenden Ansprüche umfasst.

8. Modularer Mehrstufenumsetzer (MMC-Umsetzer)/Kettengliedumsetzer, der Zellen umfasst, wobei jede Zelle eine Baugruppe oder einen Überspannungsschutz nach einem der Ansprüche 1 bis 6 umfasst.

9. MMC- oder Kettengliedumsetzer nach einem der Ansprüche 7 bis 8, der ferner Folgendes umfasst:
eine Netzschnittstelle zum Verbinden jeder der Zellen mit einem Datennetz, wobei
die Umsetzerzelle zum Ausführen eines Befehls, der vom Datennetz empfangen wird, und/oder zum Senden von Vorrichtungszustandsinformationen an das Datennetz mit der Netzschnittstelle funktionstechnisch verbunden ist.

10. MMC- oder Kettengliedumsetzer nach Anspruch 9, wobei
die Netzschnittstelle konfiguriert ist, ein digitales Signal bzw. digitale Daten zwischen der modularen Umsetzerzelle und dem Datennetz zu senden bzw. zu empfangen, wobei
das digitale Signal bzw. die digitalen Daten einen funktionstechnischen Befehl und/oder Informationen über die Umsetzerzelle oder das Netz enthalten,
und ferner eine Verarbeitungseinheit zum Umsetzen des Signals in ein digitales Signal oder zum Verarbeiten des Signals umfasst.

## Revendications

1. Ensemble destiné à être utilisé dans une cellule d'un convertisseur multiniveau modulaire (MMC) ou d'un convertisseur à maillons en chaîne, l'ensemble comportant au moins deux agencements (100) de circuits, chacun desdits au moins deux agencements (100) de circuits comportant :
un condensateur (110) doté d'une première et d'une seconde borne (115, 116) ; et
un élément (120) de commutation électrique,
l'élément (120) de commutation étant raccordé électriquement entre les première et seconde bornes (115, 116) du condensateur (110) et prévu pour être activé extérieurement afin de court-circuiter le condensateur et de dissiper l'énergie stockée dans le condensateur (110), et
les secondes bornes (116) des condensateurs desdits au moins deux agencements de circuits étant reliées électriquement et formant une seconde borne (117) de raccordement électrique de l'ensemble desdits au moins deux agencements (100) de circuits, et
pour chacun desdits au moins deux agencements (100) de circuits,
un premier côté (135) d'une impédance (130) présentant un module d'une résistance complexe supérieur à zéro étant relié électriquement à la première borne (115) du condensateur (110) desdits au moins deux agencements (100) de circuits, et
des seconds côtés (136) desdites impédances (130) desdits au moins deux agencements (100) de circuits étant reliés électriquement, pour former une première borne (118) de raccordement électrique de l'ensemble d'au moins deux agencements (100) de circuits.

2. Ensemble selon la revendication 1, les impédances étant issues du groupe comprenant des résistances, des inductances ou une combinaison de celles-ci.

3. Ensemble selon l'une quelconque des revendications 1 et 2, l'élément (120) de commutation, qui est prévu pour être activé extérieurement afin de court-circuiter le condensateur (110), étant un semiconducteur.

4. Ensemble selon l'une quelconque des revendications 1 à 3, les première et seconde bornes (118, 119) de raccordement électrique de l'ensemble desdits au moins deux agencements (100) de circuits étant prévues pour être reliées à des bornes d'une cellule de convertisseur multiniveau.

5. Ensemble selon la revendication 3, chaque semiconducteur (120) des agencements (100) de circuits étant doté d'une commande dédiée (200), prévue pour activer le semiconducteur (120) simultanément ou indépendamment l'un de l'autre.

6. Limiteur modulaire, formé de l'ensemble selon l'une quelconque des revendications 1 à 5.

7. Cellule de convertisseur multiniveau modulaire, MMC, présentant une topologie en demi-pont ou en pont complet, la cellule de MMC comportant un agencement limiteur ou l'ensemble selon l'une quelconque des revendications précédentes.

8. Convertisseur multiniveau modulaire (MMC)/convertisseur à maillons en chaîne comportant des cellules, chaque cellule comportant un ensemble ou un limiteur selon l'une quelconque des revendications 1 à 6.

9. MMC ou convertisseur à maillons en chaîne selon l'une quelconque des revendications 7 à 8, comportant en outre
une interface de réseau servant à relier chacune des cellules à un réseau de données,
la cellule de convertisseur étant reliée fonctionnellement à l'interface de réseau pour exécuter une consigne reçue en provenance du réseau de données et/ou envoyer des informations d'état de dispositif au réseau de données.

10. MMC ou convertisseur à maillons en chaîne selon la revendication 9,
l'interface de réseau étant configurée pour émettre et recevoir un signal/des données numériques entre la cellule de convertisseur modulaire et le réseau de données,
le signal/les données numériques incluant une consigne et/ou des informations opérationnelles concernant la cellule de convertisseur ou le réseau et comportant en outre une unité de traitement destinée à convertir le signal en un signal numérique ou à traiter le signal.
